# EUROPEAN PATENT SPECIFICATION

(11) **EP 2 239 703 B1**
(45) Date of publication and mention of the grant of the patent: **29.10.2014**
(21) Application number: 10154472.4
(22) Date of filing: 24.02.2010
(51) Int. Cl.: G06T 3/40

(54) **Method of sharing image based files between a group of communication devices**
Verfahren zur gemeinsamen Nutzung von bildbasierten Dateien in einer Gruppe aus Kommunikationsvorrichtungen
Procédé de partage d'images basé sur des fichiers entre un groupe de dispositifs de communication

(30) Priority: 08.04.2009 US 167544 P
(43) Date of publication of application: 13.10.2010
(60) Divisional application: 12182016.1
(73) Proprietor: BlackBerry Limited, Waterloo, ON N2K 0A7 (CA)
(72) Inventor: Little, Herbert A, Waterloo Ontario N2L 5Z5 (CA)
(74) Representative: Patel, Binesh

(56) References cited:
- EP-A1- 1 322 103
- WO-A1-01/59706
- WO-A1-98/37698
- WO-A1-98/43177
- WO-A1-2006/066632
- US-A1- 2003 217 171
- GARNER P D: "Mobile Bluetooth networking: technical considerations and applications" FOURTH INTERNATIONAL CONFERENCE ON 3G MOBILE COMMUNICATION TECHNOLOGIES (3G 2003) (IEE CONF. PUBL.NO.494) IEE LONDON, UK, 2003, pages 274-276, XP002579116 ISBN: 0-85296-756-X
- SATORU ENDO ET AL: "A data synchronization method for peer-to-peer collaboration systems", COMMUNICATIONS AND INFORMATION TECHNOLOGY, 2004. ISCIT 2004. IEEE INTE RNATIONAL SYMPOSIUM ON SAPPORO, JAPAN OCT. 26-29, 2004, PISCATAWAY, NJ, USA,IEEE, vol. 1, 26 October 2004 (2004-10-26), pages 368-373, XP010783219,

## Description

### TECHNICAL FIELD

Example embodiments described herein generally relate to mobile communications and more particularly to methods and mobile communication devices for implementing image sharing between a group of communication devices.

### BACKGROUND

Some mobile communication devices include a built-in camera which permits the capturing of real-world images or videos, which may be used for subsequent sharing to other communication devices over a network. Many of such built-in cameras can capture images which are of higher resolution than can be actually displayed on the screen of the mobile device. It may be a waste of resources to send an image over the network with a higher resolution than necessary or desired.

In some instances, sharing of images captured by such built-in cameras is facilitated by a server within a network. Each mobile communication device may send images to the server, wherein the images are accessed by or sent to the desired destination mobile communication devices. However, a server-based system requires its own hardware, infrastructure, overhead and administration adding to the total cost of ownership. Thus, it would be advantageous to provide a system which addresses some of these difficulties.

WO 01/59706 relates to transcoding of multimedia data between two or more network elements using transcoding hints associated with the multimedia data. Multimedia data may be stored at a network element and transmitted from one network elements to another. One or more capabilities associated with one of the network elements may be obtained and transcoding may be performed by a gateway or transcoder using the transcoding hints and the obtained capabilities in a manner suited to the capabilities of the network element.

### SUMMARY

In accordance with an example embodiment, there is provided a method of sharing an image based file between a group of communication devices, according to claim 1.

In accordance with another example embodiment, there is provided a mobile communication device in a group of communication devices, according to claim 13.

### BRIEF DESCRIPTION OF THE DRAWINGS

Figure 1 shows a block diagram illustrating a communication system including a mobile communication device to which example embodiments can be applied;
Figure 2 shows a block diagram illustrating a mobile communication device in accordance with an example embodiment;
Figure 3 shows a screen shot illustrating an example main user interface screen displayed on the mobile communication device of Figure 2;
Figure 4 shows a screen shot illustrating an example main imaging user interface screen in accordance with an example embodiment, which is launched from the user interface screen of Figure 3;
Figure 5 shows a user interface for viewing of image files associated with a group, which is launched from the user interface screen of Figure 4;
Figure 6 shows the user interface of Figure 5, wherein overlayed option items are removed; and
Figure 7 shows a flow diagram illustrating an example method of sharing image based files from a mobile device to other devices within a group in accordance with an example embodiment.

Like reference numerals are used in the drawings to denote like elements and features.

### DETAILED DESCRIPTION OF EXAMPLE EMBODIMENTS

In accordance with some example embodiments, there is generally provided methods and devices for sharing an image based file between a group of communication devices including at least one mobile communication device. The image based file is scaled based on a display capacity of the devices within the group.

Reference to image based files herein includes both image files and video files. Examples of image files include but are not limited to .bmp (Bitmap Image File), .eps (Encapsulated PostScript File), .gif (Graphical Interchange Format File), .jpg (JPEG Image File) and .tif (Tagged Image File). Examples of video files include but are not limited to .3gp (3GPP Multimedia File), .avi (Audio Video Interleave File), .mp4 (MPEG-4 Video File), .mpg (MPEG Video File) and .wmv (Windows Media Video File).

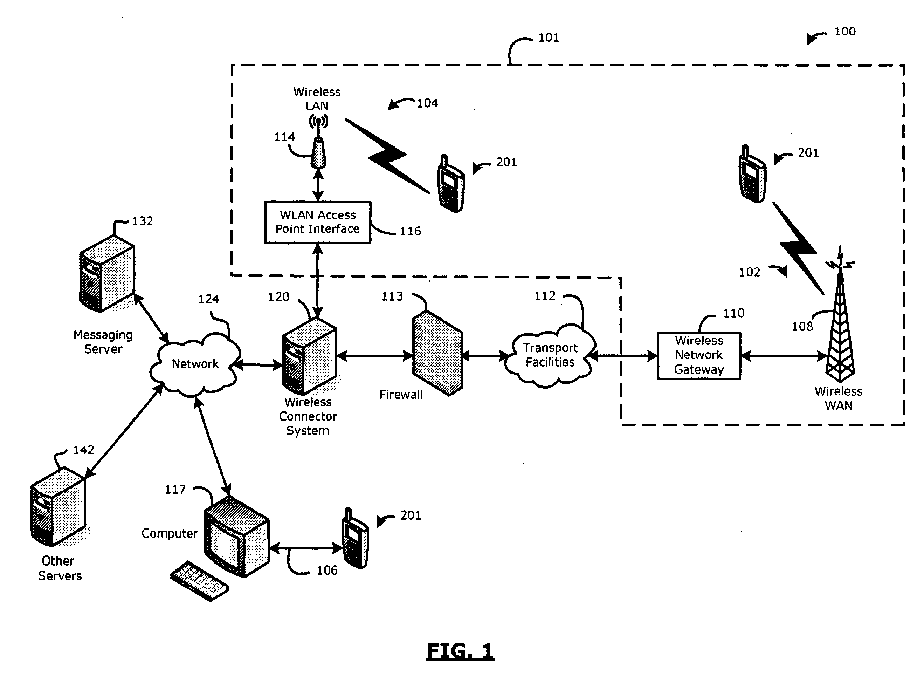

Reference is first made to Figure 1 which shows in block diagram form a communication system 100 in which example embodiments of the present disclosure can be applied. The communication system 100 comprises a number of mobile communication devices (mobile devices) 201 which may be connected to the remainder of system 100 in any of several different ways. Accordingly, several instances of mobile communication devices 201 are depicted in Figure 1 employing different example ways of connecting to system 100. Mobile communication devices 201 are connected to a wireless communication network 101 which may comprise one or more of a Wireless Wide Area Network (WWAN) 102 and a Wireless Local Area Network (WLAN) 104 or other suitable network arrangements. In some embodiments, the mobile communication devices 201 are configured to communicate over both the WWAN 102 and WLAN 104, and to roam between these networks. In some embodiments, the wireless network 101 may comprise multiple WWANs 102 and WLANs 104.

The WWAN 102 may be implemented as any suitable wireless access network technology. By way of example, but not limitation, the WWAN 102 may be implemented as a wireless network that includes a number of transceiver base stations 108 (one of which is shown in Figure 1) where each of the base stations 108 provides wireless Radio Frequency (RF) coverage to a corresponding area or cell. The WWAN 102 is typically operated by a mobile network service provider that provides subscription packages to users of the mobile communication devices 201. In some embodiments, the WWAN 102 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX), or various other networks. Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN 102 may further comprise a wireless network gateway 110 which connects the mobile communication devices 201 to transport facilities 112, and through the transport facilities 112 to a wireless connector system 120. Transport facilities may include one or more private networks or lines, the public internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, the network 124 may be realised using the internet rather than an internal or enterprise network.

The wireless network gateway 110 provides an interface between the wireless connector system 120 and the WWAN 102, which facilitates communication between the mobile communication devices 201 and other devices (not shown) connected, directly or indirectly, to the WWAN 102. Accordingly, communications sent via the mobile communication devices 201 are transported via the WWAN 102 and the wireless network gateway 110 through transport facilities 112 to the wireless connector system 120. Communications sent from the wireless connector system 120 are received by the wireless network gateway 110 and transported via the WWAN 102 to the mobile communication devices 201.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in Figure 1) that collectively provide a WLAN coverage area.

The WLAN 104 may be a personal network of the user, an enterprise network, or a hotspot offered by an internet service provider (ISP), a mobile network provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly as indicated by the dashed line of Figure 1 via the transport facilities 112 if the access point 14 is a personal Wi-Fi network or Wi-Fi hotspot (in which case a mechanism for securely connecting to the wireless connector system 120, such as a virtual private network (VPN), may be required). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email messages, to and from a set of managed mobile communication devices 201. The wireless connector system 120 also provides administrative control and management capabilities over users and mobile communication devices 201 which may connect to the wireless connector system 120.

The wireless connector system 120 allows the mobile communication devices 201 to access the network 124 and connected resources and services such as a messaging server 132 (for example, a Microsoft Exchange^{™}, IBM Lotus Domino^{™}, or Novell GroupWise^{™} email messaging server) and optionally other servers 142. The other servers 142 may comprise a content server for providing content such as internet content or content from an organization's internal servers to the mobile communication devices 201 in the wireless network 101, and an application server for implementing server-based applications such as instant messaging (IM) applications.

The wireless connector system 120 typically provides a secure exchange of data (e.g., email messages, personal information manager (PIM) data, and IM data) with the mobile communication devices 201. In some embodiments, communications between the wireless connector system 120 and the mobile communication devices 201 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data.

The wireless network gateway 110 is adapted to send data packets received from the mobile device 201 over the WWAN 102 to the wireless connector system 120. The wireless connector system 120 then sends the data packets to the appropriate connection point such as the messaging server 132 or other server 142. Conversely, the wireless connector system 120 sends data packets received, for example, from the messaging server 132 or other server 142 to the wireless network gateway 110 which then transmit the data packets to the destination mobile device 201. The AP interfaces 116 of the WLAN 104 provide similar sending functions between the mobile device 201, the wireless connector system 120 and network connection point such as the messaging server 132 or other server 142.

The network 124 may comprise a private local area network, metropolitan area network, wide area network, the public internet or combinations thereof and may include virtual networks constructed using any of these, alone, or in combination.

A mobile device 201 may alternatively connect to the wireless connector system 120 using a computer 117, such as desktop or notebook computer, via the network 124. A link 106 may be provided for exchanging information between the mobile device 201 and computer 117 connected to the wireless connector system 120. The link 106 may comprise one or both of a physical interface and short-range wireless communication interface. The physical interface may comprise one or combinations of an Ethernet connection, Universal Serial Bus (USB) connection, Firewire^{™} (also known as an IEEE 1394 interface) connection, or other serial data connection, via respective ports or interfaces of the mobile device 201 and computer 117. The short-range wireless communication interface may be a personal area network (PAN) interface. A personal area network is a wireless point-to-point connection meaning no physical cables are required to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the Bluetooth^{™} special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices 201. The teachings herein may be employed in connection with any other type of network and associated devices that are effective in implementing or facilitating wireless communication. Suitable variations of the communication system will be understood to a person of skill in the art.

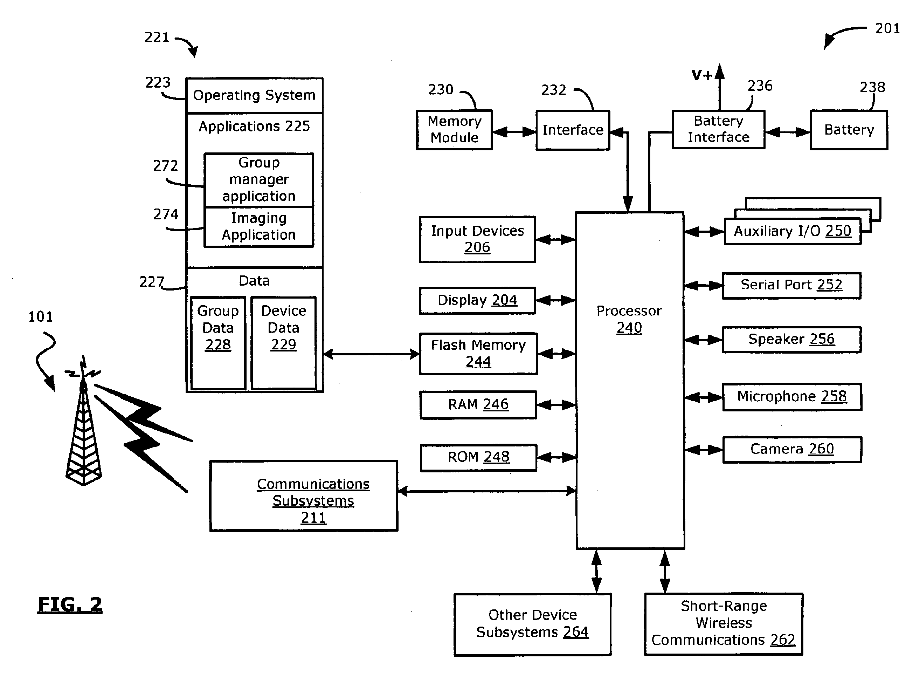

Reference is now made to Figure 2 which illustrates a mobile device 201 in which example embodiments can be applied. The mobile device 201 is a two-way communication device having data and voice communication capabilities, and the capability to communicate with other computer systems, for example, via the Internet. Depending on the functionality provided by the mobile device 201, in various embodiments the device 201 may be a multiple-mode communication device configured for both data and voice communication, a smartphone, a mobile telephone or a PDA (personal digital assistant) enabled for wireless communication, or a computer system with a wireless modem.

The mobile device 201 includes a rigid case (not shown) housing the components of the device 201. The internal components of the device 201 are constructed on a printed circuit board (PCB). The mobile device 201 includes a controller comprising at least one processor 240 (such as a microprocessor) which controls the overall operation of the device 201. The processor 240 interacts with device subsystems such as a wireless communication subsystem 211 for exchanging radio frequency signals with the wireless network 101 to perform communication functions. The processor 240 interacts with additional device subsystems including a display (screen) 204 such as a liquid crystal display (LCD) screen, input devices 206 such as a keyboard and control buttons, flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, camera 260 short-range communication subsystem 262, and other device subsystems generally designated as 264. Some of the subsystems shown in Figure 2 perform communication-related functions, whereas other subsystems may provide "resident" or on-device functions. As is known in the art, the camera 260 may be integrated within the device 201 and includes a lens configuration and associated software application(s) for detecting and capturing real-world images or video and storing into the memory 244. The camera 260 may include such features as focus, image stabilization, flash and digital or manual zooming, as is known in the art. Many of such cameras 260 are capable of capturing images in the order of at least 5 Megapixels.

The device 201 may comprise a touchscreen display in some embodiments. The touchscreen display may be constructed using a touch-sensitive input surface connected to an electronic controller and which overlays the display screen 204. The touch-sensitive overlay and the electronic controller provide a touch-sensitive input device and the processor 240 interacts with the touch-sensitive overlay via the electronic controller.

The communication subsystem 211 includes one or more communication systems for communicating with wireless base stations 108 and wireless LAN access points 114 within the wireless network 101. The particular design of the wireless communication subsystem 211 depends on the wireless network 101 in which mobile device 201 is intended to operate. The mobile device 201 may send and receive communication signals over the wireless network 101 after the required network registration or activation procedures have been completed.

The processor 240 operates under stored program control and executes software modules 221 stored in memory such as persistent memory, for example, in the flash memory 244. As illustrated in Figure 2, the software modules 221 comprise operating system software 223 and software applications 225.

Software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

The software applications 225 may further include a range of applications, including, for example, an email messaging application, address book, calendar application, notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (i.e. the display screen 204) according to the application.

In some embodiments, the auxiliary input/output (I/O) subsystems 250 may comprise an external communication link or interface, for example, an Ethernet connection. The auxiliary I/O subsystems 250 may comprise a pointing or navigational tool (input device) such as a clickable trackball or scroll wheel or thumbwheel, or a vibrator for providing vibratory notifications in response to various events on the device 201 such as receipt of an electronic message or incoming phone call, or for other purposes such as haptic feedback (touch feedback).

In some embodiments, the mobile device 201 also includes a removable memory card 230 (typically comprising flash memory) and a memory card interface 232. Network access typically associated with a subscriber or user of the mobile device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile device 201 in order to operate in conjunction with the wireless network 101.

The mobile device 201 stores data 227 in an erasable persistent memory, which in one example embodiment is the flash memory 244. In various embodiments, the data 227 includes service data comprising information required by the mobile device 201 to establish and maintain communication with the wireless network 101. The data 227 may also include user application data such as email messages, address book and contact information, calendar and schedule information, notepad documents, image based files, and other commonly stored user information stored on the mobile device 201 by its user, and other data. The data 227 stored in the persistent memory (e.g. flash memory 244) of the mobile device 201 may be organized, at least partially, into a number of databases each containing data items of the same data type or associated with the same application. For example, email messages, contact records, and task items may be stored in individual databases within the device memory.

The mobile device 201 also includes a battery 238 as a power source connected at least some of the electrical circuitry through a battery interface 236. Short-range communication subsystem 262 is an additional optional component which provides for communication between the mobile device 201 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and possibly voice communication applications will normally be installed on the mobile device 201 during or after manufacture. Additional applications and/or upgrades to the operating system 221 or software applications 225 may also be loaded onto the mobile device 201 through the wireless network 101, the auxiliary I/O subsystem 250, the serial port 252, the short-range communication subsystem 262, or other suitable subsystem 264. The downloaded programs or code modules may be permanently installed, for example, written into the program memory (i.e. the flash memory 244), or written into and executed from the RAM 246 for execution by the processor 240 at runtime.

The mobile device 201 may provide two principal modes of communication: a data communication mode and an optional voice communication mode. In the data communication mode, a received data signal such as a text message, an email message, Web page download, or an image file will be processed by the communication subsystem 211 and input to the processor 240 for further processing. For example, a downloaded Web page may be further processed by a browser application or an email message may be processed by an email message messaging application and output to the display 204. A user of the mobile device 201 may also compose data items, such as email messages, for example, using the input devices in conjunction with the display screen 204. These composed items may be transmitted through the communication subsystem 211 over the wireless network 101. In the voice communication mode, the mobile device 201 provides telephony functions and operates as a typical cellular phone.

Having provided an overview of an example of a mobile communications device to which example embodiments may be applied, specific features of an image based file sharing system will now be explained in greater detail. In an example embodiment, software applications 225 include a group manager application 272 and an imaging application 274. In some example embodiments, the functions performed by each of the group manager application 272 and imaging application 274 may each be realized as a plurality of independent elements, and any one or more of these elements may be implemented as parts of other software applications 225.

The group manager application 272 manages groups and group membership among other functions. Each group has a number of group members. Groups can be formed using methods known in the art and will not be described in detail herein. However, it will be noted that in at least some embodiments more than one group may be defined and a given mobile device 201 may be a group member in more than one group. An example of a predefined group may be a group of mobile devices 201 belonging to users in the same family, corporation, or social group. In some example embodiments, a group may contain at least one mobile device 201, and may further include at least one non-mobile device, such as computer 117 (Figure 1). In other example embodiments, a group contains only mobile communication devices in communication over the wireless network 101 (Figure 1).

The imaging application 274 generally provides for the manipulation and communication of image based files. For example, the imaging application 274 may control some of the functioning of the camera 260, as well as perform such functions as resolution scaling and image encoding/compressing, as further described in detail below.

The data 227 stored in memory may be categorized or organized into group data 228 and device data 229. The group data 228 includes data and information which is common to all mobile devices 201 within a given group. Such group data 228 may be "mirrored" or synchronized as between some or all of the mobile devices 201 in the group, so that all mobile devices 201 would contain the same information. In some example embodiments, any changes made by any one device to its group data 228 would be sent by that device to the other devices in the group for updating of each device. It can be appreciated that such groups may be referred to as serverless or peer-to-peer, because of the absence of reliance on a centralized server. Thus, the wireless network 101 merely acts as a relay rather than implementing traditional server functions. The group data 228 may be further categorized or organized into "global data" (not shown) and "private data" (not shown), wherein global data refers to information common to all mobile devices 201 in the group, while private data refers to information common to some but not all mobile devices within the group. The device data 229 includes data specific to the mobile device 201 which is typically locally accessed by the mobile device 201. Image based files may be stored in either group data 228 or device data 229, depending on the particular application as described herein.

Generally, a mobile device 201 may wish to join a specific group. The specific group may be identified by a specific group identifier, wherein the mobile device 201 may request joining the group sending a request to the one or more mobile devices 201 in the group. In other examples, the particular mobile device 201 may be invited by another device within the group to join the group. Such a request or invite may include the group identifier. Upon acceptance of the request or invite, the subject mobile device 201 sends information that includes its display capacity to all of the other devices within the group. Similarly, the other devices within the group would send information that includes their display capacity to the subject mobile device 201. In some embodiments, this exchange of display capacity information need only be performed once, when a mobile device 201 joins a group (or updated when the display capacity of a mobile device within the group changes). Accordingly, in one example embodiment, each of the devices 201 with a group stores in its own memory 244 information about the display capacity of all the other devices in that group.

In some example embodiments, the display capacity is transmitted or received in the form of pixel dimensions. For example, mobile devices are typically specified based on pixel dimensions (e.g. 480x360 pixels, which corresponds to about 2.4 inches diagonally). In other example embodiments, the display capacity is transmitted or received in the form of measured dimensions (e.g. YxZ centimetres or inches). In yet other example embodiments, the model number of the devices is transmitted or received, and the display capacity is determined or derived by the mobile device 201 based on a stored library of model numbers and their corresponding display capacities.

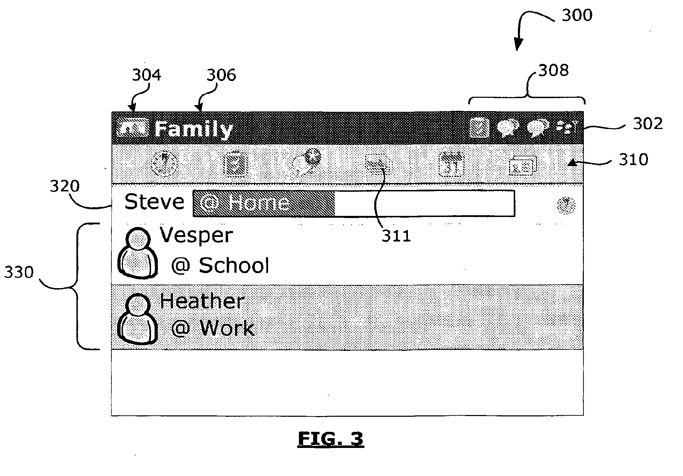

Referring now to Figure 3, an example main user interface screen 300 will be described. The main screen 300 includes a status bar 302 having a group icon 304 and group name 306 of an associated group. The status bar 302 also includes a notification area 308 in which new data notification icons and a wireless coverage indicator icon are displayed. The main screen 300 also includes an application bar 310 in which icons for switching to a respective group application (or applet) are displayed. Activation of a respective icon in the application bar 310 causes the respective application to become the active group application. The application bar 310 includes icons for various applications, such as for example a location application, list application, conversation application (e.g., chat application), imaging application 311, calendar application, and contact application (shown left to right in the application bar 310 of FIG 3).

The main screen 300 also includes a user status field 320 in which the device user's name and optionally location information are provided. In the shown example, the user name "Steve" and the location "@ Home" are shown. The main screen 300 also includes a list 330 of all other members of the group (e.g. "Vesper" and "Heather), with each member having a respective location field and status in the list 330.

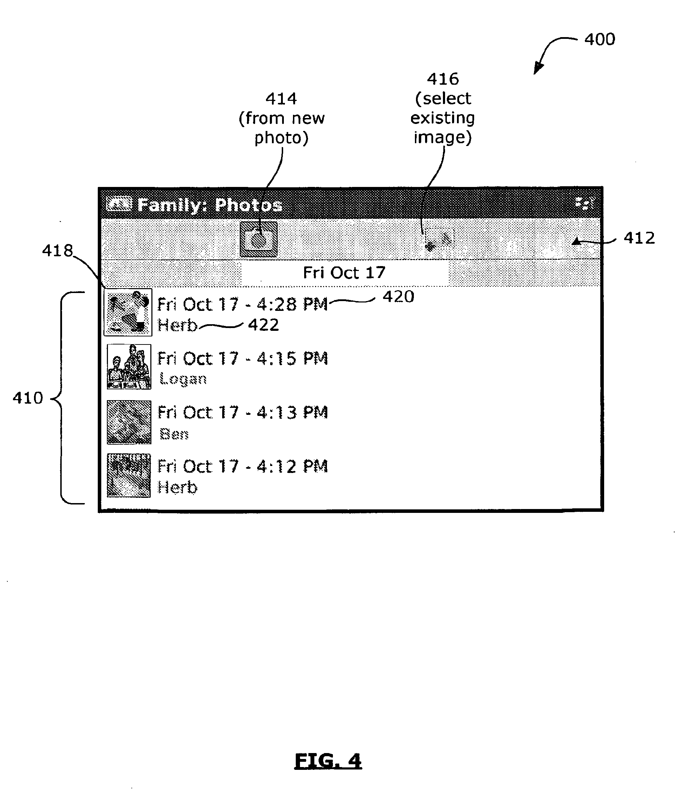

Referring now to Figure 4, selection of the imaging application icon 311 (Figure 3) results in the main imaging user interface screen 400 being displayed on the device 201. Some of the functionality described herein may be executed by the imaging application 274 (Figure 2). By way of example only, the imaging application 274 (Figure 2) will be described with respect to image files (e.g., photographs), however it will be appreciated that the functionality may be suitably configured for any image based files and associated file formats and related scaling or encoding/compression programs, including those associated with video files.

As shown in Figure 4, the interface screen 400 includes an image list 410 as well as a posting taskbar 412 for posting to a given group. The image list 410 includes a list of images which are common to the devices 201 within the group. For example, each device 201 may contain the same image files of the image list 410 in their respective flash memory 244 (Figure 2), and contained in the group data 228 (Figure 2) of each mobile device 201. Referring still to Figure 3, each of the listed image files is represented by an image-reduced version of the image file (such as a thumbnail 418, as shown), as well as the date of the image 420 ("Fri Oct 17 - 4:28 PM") and the originating user/device 422 ("Herb") who originally posted the image. The image list 410 may be sortable using another menu or dropdown menu (not shown), for example allowing the mobile device 201 to display all images, favourite images, new or recently posted images, or unviewed images.

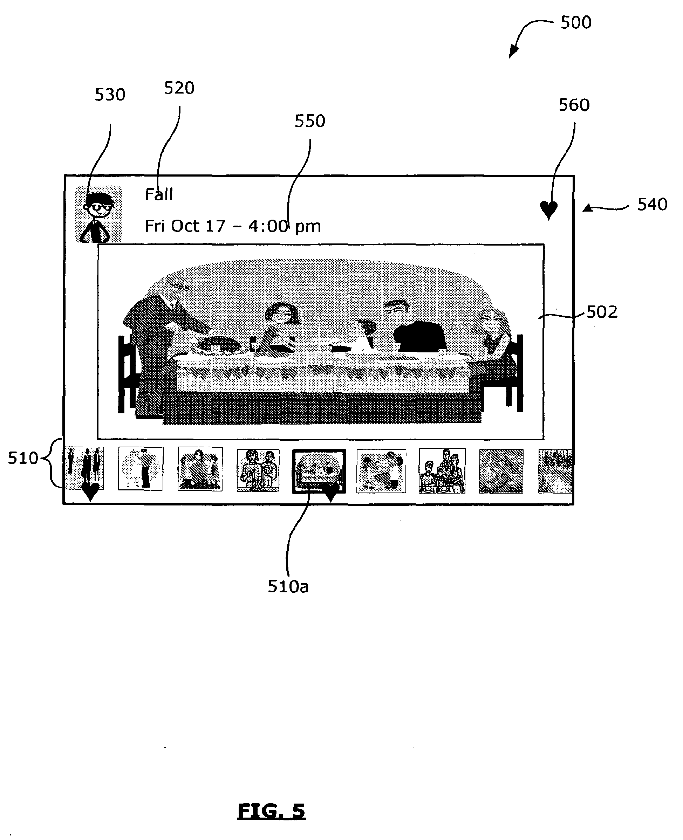

Reference is now made to Figure 5, which shows a user interface 500 for viewing of image files associated with a group, which is launched from the user interface screen 400 of Figure 4 (for example by selecting one of the image files from the image list 410). The user interface 500 may generally be used for viewing and editing of image files associated with the group. In some example embodiments, edits and changes made via the user interface 500 are automatically updated within the group by sending updates to the other devices within the group. As shown, the user interface 500 includes a sliding thumbnail bar 510 and a selected image file 510a (represented by a border or other indicator). The main display window 502 displays the selected image file 510a. The user interface 500 also includes a caption 520 ("Fall"), a timestamp ("Fri Oct 17 - 4:00 pm"), an icon 530 representing the originating user/device, and an icon region 540. The icon region may be used to toggle favourites 560 (represented by a heart icon, as shown), add voicenotes (not shown), or add comments (not shown) to the specified image file. In some example embodiments, image files may also be deleted (not shown) within the group, depending on the access rights of the particular mobile device.

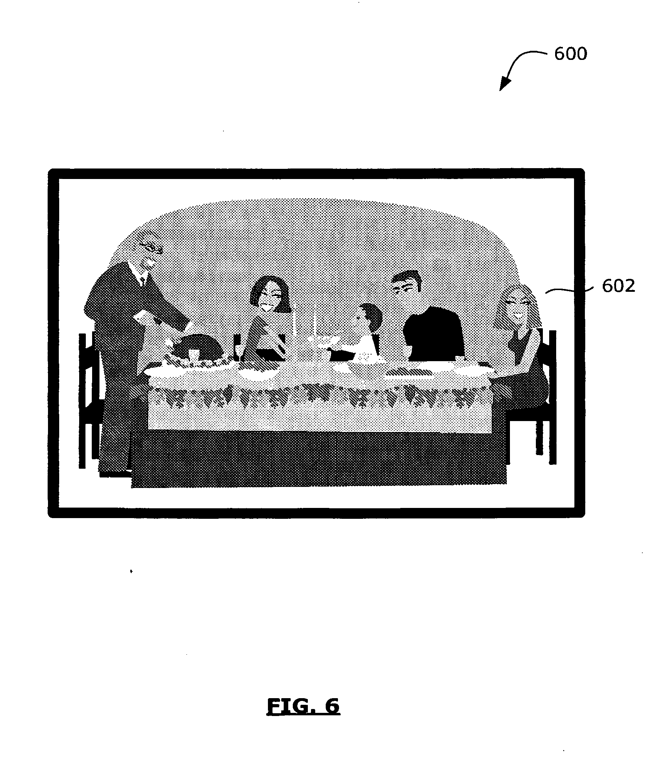

Figure 6 shows a user interface 600 which is similar to the user interface 500 of Figure 5. As shown in Figure 6, the option items which were overlayed onto the display screen are removed. This may for example occur after the user interface 500 (Figure 5) has been displayed for a predetermined period of time, such as a few seconds. Once the option items are removed, the specific image 602 may be automatically enlarged to accommodate the entire size of the screen, as shown.

The sending or posting of the image file to the group will now be described. Referring again to Figure 4, referring to the posting taskbar 412, a user of the device 201 may select the "from new photo" icon 414. Selection of this icon 414 executes a camera-specific application (not shown) which operates the camera 260 (Figure 2). This for example permits a user to capture a real world image and store as an image file in memory 244 (Figure 2), as is known in the art. Typically this includes the device 201 displaying the real world images in real time, and the user selecting a button to capture a desired image and storing as an image file (or sometimes a video file). Once the photograph is captured in an image file, a caption or title may optionally be added to the image file. Scaling or encoding/compression may be performed by the mobile device 201 on the image file as described below. The image file may be posted to the group, by sending the image file to the other devices within the group over the wireless communication network 101 (Figure 1). Once posted to the group, the image file would for example be stored within the group data 228 (Figure 2).

Referring to the posting taskbar 412, a user of the device 201 may select the "select existing image" icon 414. This for example permits the user to select an existing image file stored the device data 229. The image file may be selected as is known in the art, for example by navigating through file folders or subfolders (not shown). Once selected, scaling or encoding/compression may be performed by the mobile device 201 on the image file as described below. The selected image file is posted to the group, by sending the image file to the other devices within the group over the wireless communication network 101 (Figure 1). The other devices would for example store the image file in group data 228 (Figure 2). It can be appreciated that the selected image file may be any image file, and not limited to photographs taken by the camera 260 (Figure 2).

Once the device 201 is instructed to post the image file, the main imaging user interface screen 400 is once again displayed. In some example embodiments, a notification message may also be sent by the mobile device 201 to the other devices within the group, indicating that a new image has been posted to the group by the sending mobile device 201. The notification message may be combined with the sending of the image file or in a separate message.

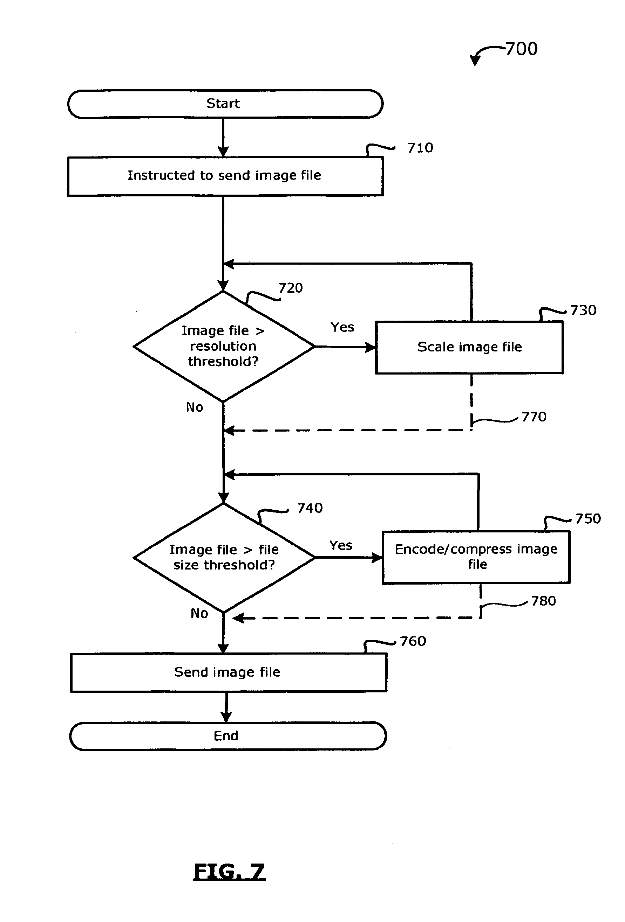

Reference is now made to Figure 7, which shows an example embodiment method 700 which may be performed by the processor 240 of the mobile device 201 under the instruction of the imaging application 274. The method 700 is shown from the perspective of the mobile device 201 sending the image file to the other devices in the group. Again, the method 700 will be described with respect to image files (e.g., photographs), although the method 700 may similarly apply to video files. In one example embodiment, method 700 is automatically performed when the device 201 is instructed to post (or send) an image file to a group.

At step 710, the mobile device 201 is instructed to send a new image file. At step 720, the mobile device 201 (for example the imaging application 274 (Figure 2)) determines whether the resolution of the image file exceeds an image resolution threshold based on the display capacity of each of the devices in the group. If yes, the method 700 proceeds to step 730, wherein the image file is scaled to within the image resolution threshold. The method may optionally once again perform step 720 to determine whether the resolution of the image file exceeds an image resolution threshold based on the display capacity of each of the devices in the group. If the resolution of the image file is within the image resolution threshold (i.e., if "no", as shown), the method proceeds to step 740, which determines whether the file size of the image file exceeds a file size threshold. If yes, the method 700 proceeds to step 750, wherein the image quality of the image file is modified. The method may once again proceed to step 740 to determine whether the file size of the image file exceeds a file size threshold. If the file size is within the file size threshold (i.e., if "no", as shown), referring now to step 760, the mobile device sends the resultant image file (which may now be scaled and compressed) to the other devices within the group.

The specific steps, according to example embodiments of the method 700 will now be described in detail. At step 710, this may for example be initiated by selecting either the "select existing image" icon 414 or the "from new photo" icon 414 (Figure 4). When the desired image file is selected or obtained from the camera 260 (Figure 2), the method 700 may proceed to the remaining steps. In some other example embodiments, steps 720 to 750 may be performed in advance of step 710. In such example embodiments, the scaling and compression are thus performed in anticipation of receiving future instructions to send the image file. For example, steps 720 to 750 may be performed upon receipt or creation of the image file.

Referring now to step 720, the specific choice of image resolution threshold may vary depending on the particular display capacities of the devices in the group. Note that the display capacity of each of the devices in the group is typically previously provisioned, as described above, wherein the display capacity may be exchanged between devices each time a new device joins the group (e.g., via request or invite). In some example embodiments, the choice of image resolution threshold is determined once the group is started, and is updated once another device joins the group. This image resolution threshold may be determined in advance and stored within the group data 228 (Figure 2) of the mobile device 201 for use in step 720. In other example embodiments, the choice of image resolution threshold is determined on-the-fly based on the instructions to send or post each image file.

In an example embodiment, the image resolution threshold may be selected based on the largest display capacity of the devices in the group. This reduces the image file size to be sent over the mobile network 101 (Figure 1), while still maintaining an image file which would appear to be appropriately scaled when viewed at each and all of the devices. Such an embodiment is appropriate when all of the devices within the group are mobile devices, for example handheld mobile devices with relatively small display sizes. In such an embodiment, any scaled image file would appear to be appropriately scaled when viewed at each and all of the mobile devices.

In another example embodiment, the image resolution threshold may be selected based on a specified ranking of the display capacities (wherein the display capacities are rankable based on size, e.g., total number of pixels). For example, it may be appropriate to base the image resolution threshold on the second largest display capacity, wherein some of the mobile devices would have an appropriately scaled image file, while the mobile device with the largest display capacity would be displaying a less than optimal image file. In yet another example embodiment, the image resolution threshold is selected as the median of the display capacities of the devices in the group. The median is the middle display capacity value in the ranking of the display capacities. Such example embodiments are appropriate when only one or a few of the devices in the group have a relatively large display capacity when compared to the remaining devices.

In yet another example embodiment, the image resolution threshold is selected from the mode or modal number of the display capacities of the devices in the group. For example, the mode of the display capacities is the display capacity which has the most occurrences within the group. Use of the mode image resolution provides those mobile devices with a generally optimally scaled image file.

In yet another example embodiment, the image resolution threshold is determined by calculating the arithmetic mean of the display capacities of the devices in the group (with appropriate rounding). The mean is the calculated average of all of the display capacities.

Thus, it can be appreciated that the selection of the optimal image resolution threshold may be dependent on the particular distribution of the display capacities. The tradeoff to be made would be to provide a suitable image resolution threshold while limiting network usage and traffic. The selection of the optimal image resolution threshold may further be done automatically or manually within the mobile device 201.

Referring still to step 720, in some example embodiments upscaling is not performed in order to limit network usage and traffic.

Referring now to step 730, it can be appreciated that various scaling techniques are known in the art for scaling down an image file. A common feature in such techniques is that when scaling down an image file to a lower resolution, some of the existing pixels are discarded (sometimes referred to as downsampling). In some example embodiments, it is known that scaling may be performed to within a known image resolution, and therefore in some example embodiments step 730 may proceed directly to step 740 (shown as dashed arrow 770).

Referring now to step 740, the specific choice of file size threshold may vary depending on the particular application. Generally, the file size threshold may be based on defined capabilities of the wireless network 101 (Figure 1). In one example embodiment, the wireless network 101 may place a restriction on a maximum size for a "datagram", for example 64 kb. Should it be desired that the image file be sent within one datagram, the image file is to be compressed to within the size of one datagram packet, for example 32 kb. The file size threshold may be determined in advanced and stored within the mobile device for use in step 740. In other example embodiments, the choice of the file size threshold is determined on-the-fly based on the posting of each image file and while determining present network capabilities of the wireless network 101 (Figure 1). This may further be done automatically or manually within the mobile device. Maintaining a known file size threshold may assist in predicting network usage and traffic when sharing image files within groups.

Referring now to steps 740 and 750 in combination, wherein in some example embodiments at least part of these steps is implemented using a JPEG based encoder to encode the image file into an encoded JPEG file. As can be appreciated, some JPEG encoders include a "quality setting", which can be in a given range (e.g., 1 to 10 or 1 to 100). The specific quality setting modifies the quality of the resultant JPEG image file based on the encoding. If a lower quality setting is used, the smaller the resultant file size. Thus, in some example embodiments, steps 740 and 750 may be performed as an iterative loop. At step 750, a JPEG quality setting is used on the original image file. At step 740, it is determined whether the resultant image file size exceeds the file size threshold. If so, at step 750 a lower JPEG quality setting is used on the original image file. This iteration repeats until the resultant image file is within the file size threshold.

In other example embodiments, referring to step 750, some image encoders may be configured to encode to within a desired file size, and therefore the file size is known and step 750 may proceed directly to step 760 (shown as dashed arrow 780).

Referring to step 760, the mobile device sends the resultant image file (which may now be scaled and compressed) to the other devices within the group, and also locally stores the resultant image file in its group data 228. In some example embodiments, the mobile device retains a copy of the original unscaled and uncompressed image file within the device data 229 (Figure 2). In other example embodiments, the original image file is discarded and only the scaled and compressed image file is stored within the group data 228 (Figure 2). A same copy of the scaled and compressed image file is thereby stored in the other devices within the group.

While the operations of the method 700 have been described as occurring in a particular order, it will be appreciated to persons skilled in the art that some of the steps may be performed in a different order provided that the result of the changed order of any given step will not prevent or impair the occurrence of subsequent steps.

As described above, in some example embodiments the image based file is a video file rather than an image file. In such example embodiments, a suitable encoder such as an MPEG or MPEG-4 encoder may be used to compress the video file, as appropriate.

While some of the present disclosure is described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

## Claims

1. A method of sharing an image based file between a group of communication devices (201), said group having a number of group members, the group of communication devices including a sending mobile communications device (201) configured to communicate over a wireless network (101), each communication device sending its display capacity to others in the group, the method further including data being synchronized as between some or all of the communication devices (201), said data including image based files, the method comprising:
accessing from a memory (244) of the sending mobile communication device (201) a display capacity of each of the communication devices in the group;
determining an image resolution threshold based on all of the display capacities of the communication devices in the group;
determining whether the resolution of the image based file exceeds the image resolution threshold, and if so scaling the image based file to within the image resolution threshold; and
sending the image based file using peer-to-peer communication from the sending mobile communication device (201) to one or more receiving communication devices (201) in the group.

2. The method of claim 1, wherein the display capacities are rankable based on size, wherein the image resolution threshold is selected based on a specified ranking of the display capacities.

3. The method of claim 1 or 3, wherein the image resolution threshold is selected based on the largest display capacity of the devices in the group.

4. The method of claim 1, wherein the image resolution threshold is selected from one of the mean, median, and mode of the display capacities of the devices in the group.

5. The method of any one of claims 1 to 4, further comprising automatically determining the image resolution threshold based on a distribution of the display capacities of the devices in the group.

6. The method of any one of claims 1 to 5, further comprising determining whether the file size of the image based file exceeds a file size threshold, and if so modifying the image quality of the image based file to within the file size threshold.

7. The method of claim 6, wherein the file size threshold is based on defined capabilities of the wireless network.

8. The method of claim 7, wherein the defined capabilities include a predetermined maximum datagram packet size for sending of the image based file within one datagram packet.

9. The method of any one of claims 1 to 8, wherein the sending mobile communication device includes a camera subsystem, the method further comprising generating the image based file from the camera subsystem and storing the image based file in the memory.

10. The method of any one of claims 1 to 9, wherein the group of mobile communication devices is identified by a group identifier, further comprising the sending mobile communication device requesting joining to the group of communication devices by sending a request to or receiving an invite from the one or more receiving communication devices in the group, the request or invite including the group identifier.

11. The method of any one of claims 1 to 10, further comprising sending the display capacity of the sending mobile communication device from the sending mobile communication device to the one or more receiving mobile communication devices in the group; receiving the display capacity of each receiving communication device in the group; and storing the received display capacities in the memory of the sending mobile communication device.

12. The method of any one of claims 1 to 11, wherein the image based file is an image file or a video file.

13. A mobile communication device in a group of communication devices, said group having a number of group members, the mobile communication device including data synchronized as between some or all of the communication devices (201), said data including image based files, comprising:
a memory (244) containing a display capacity of each of the communication devices in the group;
a controller (240); and
a communication subsystem (211) connected to the controller configured for at least data communication with a wireless network; and
the controller, in communication with the memory and the communication subsystem, and configured to execute the method of any one of claims 1 to 12.

## Patentansprüche

1. Verfahren zum Teilen einer Datei auf Bildbasis in einer Gruppe von Kommunikationsvorrichtungen (201), wobei die Gruppe eine Anzahl von Gruppenmitgliedern hat, wobei die Gruppe von Kommunikationsvorrichtungen eine sendende Mobilkommunikationsvorrichtung (201) aufweist, die dazu konfiguriert ist, über ein Drahtlosnetz (101) zu kommunizieren, wobei jede Kommunikationsvorrichtung ihre Anzeigekapazität an andere in der Gruppe sendet, wobei das Verfahren ferner aufweist, dass Daten unter einigen oder allen Kommunikationsvorrichtungen (201) synchronisiert werden, wobei die Daten Dateien auf Bildbasis einschließen, wobei das Verfahren Folgendes aufweist:
Zugreifen von einem Speicher (244) der sendenden Mobilkommunikationsvorrichtung (201) auf eine Anzeigekapazität jeder der Kommunikationsvorrichtungen in der Gruppe,
Bestimmen eines Bildauflösungsschwellenwerts aufgrund aller Anzeigekapazitäten der Kommunikationsvorrichtungen in der Gruppe,
Bestimmen, ob die Auflösung der Datei auf Bildbasis den Bildauflösungsschwellenwert überschreitet, und, wenn dem so ist, Scalieren der Datei auf Bildbasis auf innerhalb des Bildauflösungsschwellenwerts und
Senden der Datei auf Bildbasis unter Verwendung einer Peer-to-Peer-Kommunikation von der sendenden Mobilkommunikationsvorrichtung (201) an eine oder mehrere empfangende Kommunikationsvorrichtungen (201) in der Gruppe.

2. Verfahren nach Anspruch 1, wobei die Anzeigekapazitäten nach Größe geordnet werden können, wobei der Bildauflösungsschwellenwert aufgrund einer angegebenen Ordnung der Anzeigekapazitäten ausgewählt wird.

3. Verfahren nach Anspruch 1 oder 3, wobei der Bildauflösungsschwellenwert aufgrund der größten Anzeigekapazität der Vorrichtungen in der Gruppe ausgewählt wird.

4. Verfahren nach Anspruch 1, wobei der Bildauflösungsschwellenwert aus einem aus dem Durchschnitts-, dem Median- und dem Modalwert der Anzeigekapazitäten der Vorrichtungen in der Gruppe ausgewählt wird.

5. Verfahren nach einem der Ansprüche 1 bis 4, ferner mit automatischem Bestimmen des Bildauflösungsschwellenwerts aufgrund einer Verteilung der Anzeigekapazitäten der Vorrichtungen in der Gruppe.

6. Verfahren nach einem der Ansprüche 1 bis 5, ferner mit Bestimmen, ob die Dateigröße der Datei auf Bildbasis einen Dateigrößenschwellenwert überschreitet, und, wenn dem so ist, Ändern der Bildqualität der Datei auf Bildbasis auf innerhalb des Dateigrößenschwellenwerts.

7. Verfahren nach Anspruch 6, wobei der Dateigrößenschwellenwert auf festgelegten Fähigkeiten des Drahtlosnetzes basiert.

8. Verfahren nach Anspruch 7, wobei die festgelegten Fähigkeiten eine vorbestimmte Maximal-Datagramm- bzw. -datengramm-Paketgröße zum Senden der Datei auf Bildbasis in einem Datagramm- bzw. Datengrammpaket aufweist.

9. Verfahren nach einem der Ansprüche 1 bis 8, wobei die sendende Mobilkommunikationsvorrichtung ein Kamerateilsystem aufweist, wobei das Verfahren ferner ein Erzeugen der Datei auf Bildbasis von dem Kamerateilsystem und ein Speichern der Datei auf Bildbasis in dem Speicher aufweist.

10. Verfahren nach einem der Ansprüche 1 bis 9, wobei die Gruppe von Mobilkommunikationsvorrichtungen von einem Gruppenidentifikator identifiziert wird, wobei ferner die sendende Mobilkommunikationsvorrichtung einen Beitritt zur Gruppe von Kommunikationsvorrichtungen durch Senden einer Anfrage an das eine oder die mehreren empfangenden Kommunikationsvorrichtungen in der Gruppe oder Empfangen einer Einladung von dem einen oder den mehreren empfangenden Kommunikationsvorrichtungen in der Gruppe anfragt, wobei die Anfrage oder die Einladung den Gruppenidentifikator aufweist.

11. Verfahren nach einem der Ansprüche 1 bis 10, ferner mit Senden der Anzeigekapazität der sendenden Mobilkommunikationsvorrichtung von der sendenden Mobilkommunikationsvorrichtung an die eine oder die mehreren empfangenden Mobilkommunikationsvorrichtungen in der Gruppe; Empfangen der Anzeigekapazität jeder empfangenden Kommunikationsvorrichtung in der Gruppe und Speichern der empfangenen Anzeigekapazitäten in dem Speicher der sendenden Mobilkommunikationsvorrichtung.

12. Verfahren nach einem der Ansprüche 1 bis 11, wobei die Datei auf Bildbasis eine Bilddatei oder eine Videodatei ist.

13. Mobilkommunikationsvorrichtung in einer Gruppe von Kommunikationsvorrichtungen, wobei die Gruppe eine Anzahl von Gruppenmitgliedern hat, wobei die Mobilkommunikationsvorrichtung Daten aufweist, die unter einigen oder allen Kommunikationsvorrichtungen (201) synchronisiert sind, wobei die Daten Dateien auf Bildbasis einschließen, mit:
einem Speicher (244), der eine Anzeigekapazität jeder der Kommunikationsvorrichtungen in der Gruppe beinhaltet,
einer Steuerung (240) und
einem mit der Steuerung verbundenen Kommunikationsteilsystem (211), das zumindest für eine Datenkommunikation mit einem Drahtlosnetz konfiguriert ist, und
wobei die Steuerung in Kommunikation mit dem Speicher und dem Kommunikationsteilsystem ist, und dazu konfiguriert ist, das Verfahren nach einem der Ansprüche 1 bis 12 auszuführen.

## Revendications

1. Procédé de partage d'un fichier à base d'images entre un groupe de dispositifs (201) de communication, ledit groupe ayant un certain nombre de membres de groupe, le groupe de dispositifs de communication incluant un dispositif mobile (201) de communication d'envoi configuré pour communiquer sur un réseau sans fil (101), chaque dispositif de communication envoyant sa capacité d'affichage aux autres dans le groupe, le procédé incluant en outre le fait que des données sont synchronisées comme entre certains ou tous les dispositifs (201) de communication, lesdites données incluant des fichiers à base d'images, le procédé comprenant :
l'accès, à partir d'une mémoire (244) du dispositif mobile (201) de communication d'envoi, de la capacité d'affichage de chacun des dispositifs de communication du groupe ;
la détermination, en se basant sur les capacités d'affichage des dispositifs de communication du groupe, d'un seuil de résolution d'image ;
la détermination de ce que la résolution du fichier à base d'image excède ou non le seuil de résolution d'image, et, s'il en est ainsi, le redimensionnement du fichier à base d'image pour rester en deçà du seuil de résolution d'image ; et
l'envoi du fichier à base d'images, en utilisant une communication d'homologue à homologue, du dispositif mobile (201) de communication d'envoi à un ou plusieurs dispositifs (201) de communication de réception du groupe.

2. Procédé selon la revendication 1, dans lequel les capacités d'affichage sont classables par ordre en se basant sur la taille, dans lequel le seuil de résolution d'image est choisi en se basant sur un rang spécifié des capacités d'affichage.

3. Procédé selon la revendication 1 ou 2, dans lequel le seuil de résolution d'image est choisi en se basant sur la plus grande capacité d'affichage des dispositifs du groupe.

4. Procédé selon la revendication 1, dans lequel le seuil de résolution d'image est choisi en se basant sur l'un de la moyenne, de la médiane et du mode des capacités d'affichage des dispositifs du groupe.

5. Procédé selon l'une quelconque des revendications 1 à 4, comprenant en outre la détermination automatique du seuil de résolution d'image en se basant sur une répartition des capacités d'affichage des dispositifs du groupe.

6. Procédé selon l'une quelconque des revendications 1 à 5, comprenant en outre la détermination de ce que la taille de fichier du fichier à base d'images excède ou non un seuil de taille de fichier, et, s'il en est ainsi, la modification de la qualité d'image du fichier à base d'images pour rester en deçà du seuil de taille de fichier.

7. Procédé selon la revendication 6, dans lequel le seuil de taille de fichier est basé sur des possibilités définies du réseau sans fil.

8. Procédé selon la revendication 7, dans lequel les possibilités définies incluent une taille maximale prédéterminée de paquet de datagrammes pour envoyer le fichier à base d'images à l'intérieur d'un seul paquet de datagramme.

9. Procédé selon l'une quelconque des revendications 1 à 8, dans lequel le dispositif mobile de communication d'envoi inclut un sous-système d'appareil de prise de vue, le procédé comprenant en outre la génération du fichier à base d'images à partir du sous-système d'appareil de prise de vue et la mémorisation du fichier à base d'images dans la mémoire.

10. Procédé selon l'une quelconque des revendications 1 à 9, dans lequel le groupe de dispositifs mobiles de communication est identifié par un identifiant de groupe, comprenant en outre le fait que le dispositif mobile de communication d'envoi demande à se joindre au groupe de dispositifs de communication en envoyant une demande à un ou plusieurs dispositifs de communication de réception du groupe ou en en recevant une invitation, la demande ou l'invitation incluant l'identifiant de groupe.

11. Procédé selon l'une quelconque des revendications 1 à 10, comprenant en outre l'envoi de la capacité d'affichage du dispositif mobile de communication d'envoi par le dispositif mobile de communication d'envoi aux un ou plusieurs dispositifs mobiles de communication de réception du groupe ; la réception de la capacité d'affichage de chaque dispositif de communication de réception du groupe ; et la mémorisation des capacités d'affichage dans la mémoire du dispositif mobile de communication d'envoi.

12. Procédé selon l'une quelconque des revendications 1 à 11, dans lequel le fichier à base d'images est un fichier d'images ou un fichier vidéo.

13. Dispositif mobile de communication dans un groupe de dispositifs de communication, ledit groupe ayant un certain nombre de membres de groupe, le dispositif mobile de communication incluant des données synchronisées comme entre certains ou tous les dispositifs (201) de communication, lesdites données incluant des fichiers à base d'images, comprenant :
une mémoire (244) contenant la capacité d'affichage de chacun des dispositifs de communication du groupe ;
un régisseur (240) ; et
un sous-système (211) de communication connecté au régisseur, configuré pour au moins la communication de données avec un réseau sans fil ; et
le régisseur, en communication avec la mémoire et le sous-système de communication, étant configuré pour mettre en ouvre le procédé selon l'une quelconque des revendications 1 à 12.
